# EUROPEAN PATENT APPLICATION

(11) **EP 3 744 793 A1**
(43) Date of publication of application: **02.12.2020**
(21) Application number: 19741891.6
(22) Date of filing: 22.01.2019
(51) Int. Cl.: C08L 101/12, C08K 5/05, C08K 5/548, C08L 91/08, C09K 3/00

(54) **COMPOSITION AND REDOX MATERIAL USING THIS**

(30) Priority: 22.01.2018 JP 2018008329; 20.09.2018 JP 2018176581
(71) Applicant: Idemitsu Kosan Co.,Ltd., Chiyoda-ku Tokyo 100-8321 (JP)
(72) Inventor: ARAI, Naoko, Sodegaura-shi, Chiba 299-0293 (JP); TOMAI, Shigekazu, Sodegaura-shi, Chiba 299-0293 (JP); FUKATSU, Fumioki, Sodegaura-shi, Chiba 299-0293 (JP)
(74) Representative: Gille Hrabal
(86) International application number: PCT/JP2019/001840
(87) International publication number: WO 2019/142943

(57) **Abstract**

A composition comprising a conductive polymer, and a compound having an OH group and further having a butoxy group.

## Description

### Technical Field

The present invention relates to a composition and a redox material using the same.

### Background Art

Conductive polymers such as polyaniline are functional materials that are attracting attention from the viewpoints of conductivity and processability. Conductive polymers have captured markets for antistatic coating agents, capacitor electrode materials, organic EL (electroluminescence) display materials, and the like, and are expanding their application range.

It is disclosed that a composition is prepared by dissolving a conductive polymer in propylene glycol monomethyl ether or the like, or dispersing the polymer in methanol or the like (for example, see Patent Documents 1 to 3).

### Related Art Documents

### Patent Documents

[Patent Document 1] JP 2008-050607
[Patent Document 2] JP 2010-033881
[Patent Document 3] WO 2009/075201

### Summary of the Invention

The present inventors examined the conductive polymers and solvents described in Patent Documents 1 to 3, and found that their solubility in a binder was insufficient. In addition, toluene, which dissolves conductive polymers, is toxic and has environmental problems.

It is an object of the present invention to provide a composition and a redox material having high solubility of a conductive polymer in a binder and low toxicity.

As a result of extensive studies to solve the above problems, the present inventors have found that, by combining a solvent having a specific structure with a conductive polymer, even when a binder is added, excellent solubility is exhibited, and thus, the present invention has been completed.

According to the present invention, the following composition and the like are provided.
1. A composition comprising
   a conductive polymer, and
   a compound having an OH group and further having a butoxy group.
2. The composition according to 1, wherein the compound having an OH group and further having a butoxy group further has an alkylene group including 1 to 6 carbon atoms.
3. The composition according to 1 or 2, wherein the compound having an OH group and further having a butoxy group is a compound represented by the following formula (11):

   R¹-O-R²-OH (11)

   wherein in the formula (11), R¹ is a butyl group; and R² is an alkylene group including 1 to 6 carbon atoms.
4. The composition according to 3, wherein R¹ is a n-butyl group, an isobutyl group, or a tert-butyl group.
5. The composition according to 3 or 4, wherein R² is a methylene group, an ethylene group, a propylene group, or a butylene group.
6. The composition according to any one of 1 to 5, wherein the compound having an OH group and further having a butoxy group is one or more selected from the group consisting of propylene glycol mono-n-butyl ether, propylene glycol mono-tert-butyl ether, propylene glycol monoisobutyl ether, ethylene glycol mono-n-butyl ether, ethylene glycol mono-tert-butyl ether, and ethylene glycol monoisobutyl ether.
7. The composition according to any one of 1 to 6, wherein the conductive polymer is a substituted or unsubstituted polyaniline doped with a dopant.
8. The composition according to 7, wherein the dopant is a sulfosuccinate derivative.
9. The composition according to any one of 1 to 8, further comprising a phenolic compound.
10. The composition according to 9, wherein the phenolic compound is cresol.
11. The composition according to any one of 1 to 10, wherein the content of the conductive polymer is 15 to 35% by mass, based on the total mass of the composition.
12. The composition according to any one of 1 to 11, further comprising a binder.
13. The composition according to 12, wherein the binder is a resin other than the conductive polymer.
14. The composition according to 12, wherein the binder is an oil.
15. The composition according to 14, wherein the oil is paraffin.
16. A redox material, comprising the composition according to any one of 1 to 15.
17. The redox material according to 16, having conductivity.

According to the present invention, it is possible to provide a composition and a redox material having high solubility of a binder and low toxicity.

### Detailed Description of the Invention

### [Composition]

The composition of the present invention contains a conductive polymer (hereinafter, sometimes referred to as a "component (a)") and a compound having an OH group and further having a butoxy group (hereinafter, sometimes referred to as a "component (b)").

The composition of the present invention has excellent solubility of a conductive polymer by having the above constitution, and high solubility is maintained even when a binder is further added. Also, it has low toxicity.

In the present invention, a high solubility of a conductive polymer (or a conductive polymer complex) in a binder means that the solubility of the conductive polymer (or the conductive polymer complex) in the binder itself is high, and that the solubility is maintained without precipitation of the conductive polymer even when the binder is added to the composition containing the conductive polymer (or the conductive polymer complex) and components (b).

Further, as another effect in the present invention or one embodiment of the present invention, effects such as improvement of redox property, improvement of rust prevention property, homogenization of conductivity and improvement of conductivity, further improvement of conductive polymer solubility, and improvement of safety on an environmental perspective can be mentioned.

### ((a) conductive polymer)

The conductive polymer is not particularly limited as long as the polymer exhibits conductivity.

Specific examples thereof preferably include polyacetylene-based polymers such as polyacetylene, polymethylacetylene, polyphenylacetylene, polyfluoroacetylene, polybutylacetylene, and polymethylphenylacetylene; polyphenylene-based polymers such as polyorthophenylene, polymethaphenylene, and polyparaphenylene; polypyrrole-based polymers such as polypyrrole, poly(3-methylpyrrole), poly(3-ethylpyrrole), poly(3-dodecylpyrrole), poly(3,4-dimethylpyrrole), poly(3-methyl-4-dodecylpyrrole), poly(N-methylpyrrole), poly(N-dodecylpyrrole), poly(N-methyl-3-methylpyrrole), poly(N-ethyl-3-dodecylpyrrole), and poly(3-carboxypyrrole); polythiophene-based polymers such as polythiophene, poly(3-methylthiophene), poly(3-ethylthiophene), poly(3,4-dimethylthiophene), poly(3,4-diethylthiophene), and poly(3,4-ethylenedioxythiophene); polyfuran; polyselenophene; polyisothianaphthene; polyphenylene sulfide; polyaniline-based polymers such as polyaniline, poly(2-methylaniline), poly(2-ethylaniline), and poly(2,6-dimethylaniline); polyphenylene vinylene; polythiophene vinylene; polyperynaphthalene; polyanthracene; polynaphthalene; polypyrene; polyazulene; or derivatives thereof. These examples may be used alone, or two or more types may be used in combination.

Among these, at least one selected from the group consisting of polypyrrole-based polymers, polythiophene-based polymers, and polyaniline-based polymers are more preferred from the viewpoint of stability, reliability, or ease of availability and the like.

As the conductive polymer, a substituted or unsubstituted polyaniline is further preferred from the viewpoint of durability and heat resistance. Substituents of polyaniline include a methyl group, an ethyl group, and the like.

The molecular weight of the conductive polymer is not particularly limited, and for example, when the dopant is a sulfosuccinate and/or a sulfosuccinate derivative, the weight-average molecular weight is preferably 10,000 or more, more preferably 20,000 or more, still more preferably 30,000 or more and 1,000,000 or less, still more preferably 40,000 or more and 1,000,000 or less, and particularly preferably 52,000 or more and 1,000,000 or less, or 70,000 or more and 1,000,000 or less. Alternatively, the molecular weight of the conductive polymer is preferably a weight-average molecular weight of 500 or more and 52,000 or less, more preferably 1,000 or more and 40,000 or less, when the dopant is other than sulfosuccinate and sulfosuccinate derivative. In addition, the molecular weight distribution of the conductive polymer is, for example, 1.5 to 10.0.

The molecular weight and the molecular weight distribution mentioned above are measured by gel permeation chromatograph (GPC).

Specifically, they are measured by the following GPC analysis conditions. The solvent is N-methyl-2-pyrrolidone (NMP).

Equipment: High-speed GPC-system HLC-8220 (manufactured by Tosoh Corporation)
Detector: Differential refractometer and ultraviolet-visible absorption detector (254 nm)
Column: TSK-gel α-M × 2 columns (manufactured by Tosoh Corporation)
Guard column: TSK-gel ALPHA (manufactured by Tosoh Corporation)
Column temperature: 40°C
Solvent: NMP
Amount injected :100 µL
Flow rate: 1 mL/min
Standard: TSK-gel Standard Polystyrene (manufactured by Tosoh Corporation)
Input concentration: 0.1 wt%

A method for producing a conductive polymer is not particularly limited, and a conventionally-known method can be employed. Specific examples of the method for producing include, for example, a chemical polymerization method, an electrolytic polymerization method, a soluble precursor method, a matrix (template) polymerization method, or a vapor deposition method such as CVD. As the conductive polymer, a commercial product may be used.

The conductive polymer is preferably doped with a dopant from the viewpoint of improving conductivity (hereinafter, the conductive polymer doped with the dopant is sometimes referred to as a "conductive polymer complex"). From the viewpoint of improving conductivity, a substituted or unsubstituted polyaniline doped with a dopant (a protonated substituted or unsubstituted polyaniline) is more preferred. Substituents are the same as the substituents of polyaniline described above.

Specific examples of the dopant preferably include halogen ions such as a chloride ion, a bromide ion, and an iodide ion; a perchlorate ion; a tetrafluoroborate ion; an arsenate hexafluoride ion; a sulfate ion; a nitrate ion; a thiocyanate ion; a silicate hexafluoride ion; phosphate-based ions such as a phosphate ion, a phenyl phosphate ion, and a hexafluoride phosphate ion; a trifluoroacetate ion; alkylbenzenesulfonate ions such as a tosylate ion, an ethylbenzenesulfonate ion, and an dodecylbenzenesulfonate ion; alkylsulfonate ions such as a methylsulfonate ion, an ethylsulfonate ion, and a diisooctylsulfosuccinate ion; polymer ions such as a polyacrylate ion, a polyvinyl sulfonate ion, a polystyrene sulfonate ion, and a poly(2-acrylamide-2-methylpropanesulfonate) ion.

These examples may be used alone, or two or more types may be used in combination. Among these, a polystyrene sulfonate ion and a diisooctylsulfosuccinate ion are more preferred in terms of the expression of high solubility.

As the dopant, one or more of ions selected from aromatic sulfonate, aromatic polysulfonate, organic sulfonate having a hydroxy group, organic sulfonate having a carboxyl group, alicyclic sulfonate and benzoquinone sulfonate may be used.

Specific examples of the organic sulfonate include dodecylbenzenesulfonate, toluenesulfonate, benzenesulfonate, naphthalenesulfonate, benzenedisulfonate, naphthalenedisulfonate, phenolsulfonate, sulfoisophthalate, sulfosalicylate, camphorsulfonate, adamantanesulfonate, and sulfosuccinate.

Further, as the dopant, a sulfosuccinate derivative may be used, and a sulfosuccinate derivative represented by the following formula (1) is preferred. 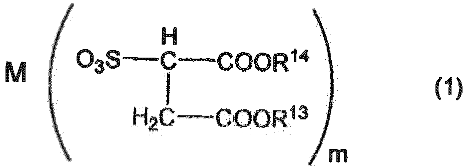
wherein in the formula (1), M is a hydrogen atom, an organic free radical or an inorganic free radical; m is a valence of M;
R¹³ and R¹⁴ are independently a hydrocarbon group or -(R¹⁵O)ᵣ-R¹⁶ group [wherein in the formula, R¹⁵ are independently a hydrocarbon group or a silylene group; R¹⁶ is a hydrogen atom, a hydrocarbon group or (R¹⁷)₃Si- group (wherein in the formula, R¹⁷ are independent a hydrocarbon group); and r is an integer of 1 or more].

Examples of the organic free radical of M include a pyridinium group, an imidazolium group, and an anilinium group. As the inorganic free radical of M, lithium, sodium, potassium, cesium, ammonium, calcium, magnesium, and iron can be given, for example.

Examples of the hydrocarbon group when R¹³ and R¹⁴ are hydrocarbon groups include a linear or branched alkyl group including 1 to 24, preferably 4 or more carbon atoms, an aryl group containing an aromatic ring, and an alkylaryl group; and specific examples of the hydrocarbon group when R¹³ and R¹⁴ are hydrocarbon groups include, for example, a linear or branched butyl group, pentyl group, hexyl group, octyl group, and decyl group.

Examples of the hydrocarbon group when R¹⁵ in R¹³ and R¹⁴ is a hydrocarbon group include, for example, a linear or branched alkylene group including 1 to 24 carbon atoms, an arylene group containing an aromatic ring, an alkylarylene group, and an arylalkylene group. In addition, examples of the hydrocarbon group when R¹⁶ and R¹⁷ in R¹³ and R¹⁴ are hydrocarbon groups include a linear or branched alkyl group including 1 to 24 carbon atoms, an aryl group containing an aromatic ring, and an alkylaryl group.

r is preferably 1 to 10.

Specific examples of the dopant when R¹³ and R¹⁴ are -(R¹⁵O)ᵣ-R¹⁶ include two dopants represented by the following formula.

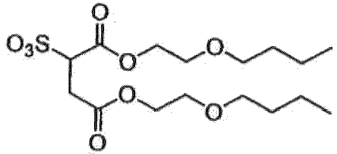

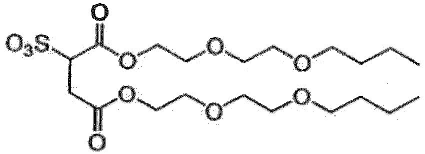

It is preferable that the conductive polymer complex contain a phenolic compound. The phenolic compound functions as a conductivity improver and can improve the conductivity of the conductive polymer complex.

The phenolic compound may also be a phenolic compound represented by ArOH (wherein in the formula, Ar is an aryl group or a substituted aryl group). Specific examples thereof include phenol, substituted phenol derivatives such as o-, m- or p-cresol, o-, m- or p-ethylphenol, o-, m- or p-propylphenol, o-, m- or p-butylphenol, o-, m- or p-chlorophenol, salicylate, hydroxybenzate and hydroxynaphthalene; polyvalent phenolic compounds such as catechol and resorcinol; and polymer compounds such as a phenol resin, polyphenol and poly(hydroxystyrene).

The phenolic compound is preferably alkoxy phenol, alkyl phenol or alkyl naphthol of which the number of carbon atoms of an alkyl group is 1 to 20, more preferably amylphenol, methoxyphenol or isopropylphenol, and still more preferably p-tert-amylphenol, 4-methoxyphenol or 4-isopropyl phenol.

Further, the phenolic compound is preferably cresol, and more preferably o-, m- or p-cresol.

The dopant doped with the conductive polymer may be one dopant alone or two or more dopants.

In the conductive polymer complex, the content of the dopant is preferably 3 to 50 parts by mass, more preferably 10 to 30 parts by mass, based on 100 parts by mass of the conductive polymer.

The dopant concentration in the conductive polymer complex means the concentration of the dopant (counter anion) relative to the monomer unit constituting the conductive polymer. For example, if the conductive polymer has a thiophene ring and the counter anion has sulfonate, the dopant concentration is defined as 100% when the thiophene ring: sulfonate is 1:1 (molar ratio). In addition, in the case where the conductive polymer is polyaniline, since the conductive polymer becomes a monovalent cation at two aniline rings, for example, if the counter anion has sulfonate, the dopant concentration becomes 100% when the aniline ring: sulfonate is 2:1.

The dopant concentration in the conductive polymer complex can be confirmed by X-ray photoelectric spectroscopy.

The form of the conductive polymer is not particularly limited, and may be any form such as fibrous, solid, liquid, powder, granular, solution, or dispersed liquid.

When the conductive polymer is fibrous, it may contain inorganic particles such as carbon materials such as carbon nanotubes, graphene, graphite, and the like, pigments, colorants, and the like, within a range not impairing its characteristics.

### ((b) compound having an OH group and further having a butoxy group)

The compound having an OH group and further having a butoxy group preferably further has an alkylene group including 1 to 6 carbon atoms from the viewpoint of economic efficiency.

Examples of the butoxy group include a group in which oxygen atom is bonded with a butyl group of R¹ described later.

Examples of the alkylene group including 1 to 6 carbon atoms include the same as alkylene group including 1 to 6 carbon atoms of R² described later.

The component (b) is preferably a compound represented by the following formula (11):

R¹-O-R²-OH (1 1)

wherein in the formula (11), R¹ is a butyl group; and R² is an alkylene group including 1 to 6 carbon atoms.

The butyl group of R¹ is preferably an n-butyl group, an isobutyl group, or a tert-butyl group from the viewpoint of boiling point.

The butyl group of R¹ is preferably unsubstituted.

The butyl group of R¹ is more preferably linear. When the butyl group is linear, it is considered that the interaction with the component (a) is increased and the solubility is improved.

The alkylene group including 1 to 6 (preferably 1 to 4, more preferably 1, 2 or 3) carbon atoms of R² is preferably a methylene group, an ethylene group, a propylene group, or a butylene group from the viewpoint of economic efficiency.

The alkylene group including 1 to 6 carbon atoms of R² is preferably unsubstituted.

The component (b) is preferably one or more selected from the group consisting of propylene glycol mono-n-butyl ether, propylene glycol mono-tert-butyl ether, propylene glycol mono-isobutyl ether, ethylene glycol mono-n-butyl ether, ethylene glycol mono-tert-butyl ether, and ethylene glycol mono-isobutyl ether from the viewpoint of solubility of polyaniline. Among these, propylene glycol mono-n-butyl ether having a linear butoxy group is preferred.

The component (b) may be used alone, or two or more types may be used in combination.

In addition, the component (b) and the other compound (other solvent) may be combined. Examples of the other compound include a compound having an OH group and a phenoxy group, a ketone-based solvent, an ester-based solvent, and a hydrocarbon-based solvent.

When the component (b) and the above other solvent (e.g., compound having an OH group and a phenoxy group) are used in combination, these mass ratios in the composition are not particularly limited, and may be, for example, 1:9 to 9:1, 2:8 to 8:2, 3:7 to 7:3 or 4:6 to 6:4.

Examples of the compound having an OH group and a phenoxy group include a compound having a phenyl group as R¹ in the formula (11) and an alkylene group including 1 to 6 carbon atoms exemplified for the formula (11) as R².

The content of the conductive polymer is preferably 15 to 35% by mass, more preferably 18 to 32% by mass, and still more preferably 20 to 30% by mass, based on the total mass of the composition, from the viewpoint of viscosity of the composition.

When the content is within the above range, even when the composition contains a binder to be described later, solubility of polyaniline can be improved.

The content of the conductive polymer can be determined as the solid concentration of the composition.

### (Binder)

From the viewpoint of improving adhesion, the composition of the present invention further preferably contains a binder. The binder is an organic material other than the above-mentioned conductive polymer, and the binder is an organic material having a binding effect.

Examples of the binder include a resin other than the conductive polymer, and an oil. By using a resin other than the conductive polymer, fastness and abrasion resistance can be improved.

Examples of the resin other than the conductive polymer include polyolefins such as polyethylene and polypropylene, chlorinated polyolefin, polystyrene, polyester, polyamide, polyacetal, polyethylene terephthalate, polycarbonate, polyethylene glycol, polyethylene oxide, polyacrylate, polyacrylate ester, polymethacrylate ester, and polyvinyl alcohol.

As the resin other than the conductive polymer, a thermosetting resin such as an epoxy resin, a urethane resin, or a phenol resin, or a precursor capable of forming the above-mentioned thermosetting resin may be used.

The resin other than the conductive polymer may be used alone, or two or more types may be used in combination.

The oil preferably has a fluidity at 25°C or 100°C.

By using the oil, wettability, abrasion resistance, corrosion resistance, and lubrication can be improved.

Examples of the oil include petroleum, mineral oil, paraffin, silicon oil, and grease.

Examples of the paraffin include wax, petrolatum, and grease.

Examples of the wax include vegetable wax, animal wax, mineral wax, petroleum wax, and synthetic wax.

The binder (resin and oil, etc. other than the conductive polymer) may be used alone, or two or more types may be used in combination.

When the composition of the present invention contains a binder, the content of the conductive polymer may be 0.01 to 10% by mass, 0.1 to 5% by mass, or 0.2 to 3% by mass, or the like, based on the total mass of the composition, from the viewpoint of adhesion.

### (Other materials)

The composition of the present invention may contain a stabilizing agent, an inorganic material, a curing agent, a plasticizer, an organic conductive material, and the like.

By containing the inorganic material, mechanical properties such as strength, surface hardness, dimensional stability, and the like can be improved. Further, it is possible to improve the electrical characteristics such as conductivity.

Examples of the inorganic material include, for example, silica (silicon dioxide), titania (titanium dioxide), alumina (aluminum oxide), Sn-containing In₂O₃ (ITO), Zn-containing In₂O₃, a co-substituted compound of In₂O₃ (oxide in which at least one of the tetravalent element and divalent element is substituted by In), Sb-containing SnO₂ (ATO), ZnO, Al-containing ZnO (AZO), Ga-containing ZnO (GZO).

By containing the curing agent, mechanical properties such as strength, surface hardness, dimensional stability, and the like can be improved.

Examples of the curing agent include thermosetting agents such as a phenol resin, and a photocuring agent by an acrylate-based monomer and a photopolymerization initiator.

By containing a plasticizer, mechanical properties such as tensile strength and bending strength can be improved.

Examples of the plasticizer include phthalic esters and phosphoric esters.

Examples of the organic conductive material include carbon materials such as carbon black, carbon nanotubes, and graphene.

The composition of the present invention consists essentially of a component (a) and a component (b), and optionally one or more components selected from the group consisting of other solvents (e.g. a compound having an OH group and a phenoxy group), a binder, a stabilizer, an inorganic material, a curing agent, a plasticizer, and an organic conductive material, and may include other unavoidable impurities within a range not impairing the present effects of the Invention.

For example, 90 to 100% by mass, 95 to 100% by mass, 99 to 100% by mass, 99.5 to 100% by mass, 99.9 to 100% by mass or 100% by mass of the composition of the present invention may be a component (a) and a component (b); a component (a), a component (b) and binder; a component (a), a component (b) and other solvent (e.g. a compound having an OH group and a phenoxy group), a component (a), a component (b), other solvent (e.g. a compound having an OH group and a phenoxy group), and binder; and each combination of the above may optionally contain one or more components selected from the group consisting of a stabilizer, an inorganic material, a curing agent, a plasticizer and an organic conducting material.

The method for producing a composition of the present invention is not particularly limited, and a composition of the present invention can be prepared by a known method. The composition of the present invention may be prepared, for example, by the methods disclosed in WO05/052058.

The composition of the present invention can be used for a redox material, an antistatic material, or the like.

It is preferable that the redox material of the present invention have conductivity from the viewpoint of redox reaction activity.

### EXAMPLES

### Preparation Example 1 (preparation of polyaniline complex)

37.8 g of Aerosol OT (sodium di(2-ethylhexyl)sulfosuccinate, purity: 75% or more, manufactured by FUJIFILM Wako Pure Chemical Corporation) and 1.47 g of Sorbon T-20 (a nonionic emulsifier having a polyoxyethylene sorbitan fatty acid ester structure, manufactured by TOHO Chemical Industry Co., Ltd.) were dissolved in 600 mL of toluene to prepare a solution.

The resulting solution was placed in a 6 L separable flask placed under a stream of nitrogen. 22.2 g of aniline was further added to this solution. Thereafter, 1800 mL of 1 mol/L phosphate aqueous solution was added to this solution, and the temperature of the solution having two liquid phases of toluene and water was cooled to 5°C.

After the internal temperature of the solution reached 5°C, the solution was stirred at 390 rotations per minute immediately. To the stirred solution, a solution of ammonium persulfate in which 65.7 g of ammonium persulfate was dissolved in 600 mL of 1 mol/L phosphate was added dropwise over 2 hours using a dropping funnel while stirring. Stirring was carried out for 18 hours from the start of the dropping while keeping the internal temperature of the solution at 5°C. Thereafter, the internal temperature of the solution was raised to 40°C, and stirring was continued for 1 hour. Thereafter, the solution was allowed to stand to separate into two phases. The water phase of the two separated phases was separated and the organic phase was obtained.

To the obtained organic phase, 1500 mL of toluene was added, and washing was performed 1 time with 600 mL of 1 mol/L phosphate and 3 times with 600mL of ion-exchanged water. The insoluble substance was removed by filtration using a #5C filter paper to obtain a polyaniline complex toluene solution.

The obtained polyaniline complex toluene solution was transferred to an evaporator, warmed in a hot water bath at 60°C, and reduced in pressure, whereby the volatiles were distilled off to obtain 43.0 g of a powdery polyaniline complex.

### Example 1

### (Preparation of polyaniline solution)

A polyaniline complex solution (polyaniline solution) was judged to have been obtained when the evaluation was "O" (meaning "good") in the solubility tests in the following Examples and Comparative Examples.

2 g of polyaniline complex obtained in Preparation Example 1 and 6 g of propylene glycol mono-n-butyl ether were mixed and stirred at 1000 rpm using a disper to prepare a mixture having a solid concentration of 25% by mass.

### (Solubility test of polyaniline complex in solvent)

The resulting mixture was applied to a glass slide and the prepared slide was placed on an optical microscope and observed at 50x magnification. The solubility test of the polyaniline complex was carried out as follows.

The length of the long-side of the aggregate of the largest polyaniline complex (the distance connecting the farthest 2 points of the aggregate of one polyaniline complex) contained in the area of 2.0 mm×2.6 mm in the observed image of the optical microscope was measured and evaluated by the following criterion. The results are shown in Table 1.

The length of the long-side is less than 10 µm: O (meaning "good")

The length of the long-side is 10 µm or more and less than 100 µm: Δ (meaning "poor")

The length of the long-side is 100 µm or more: X (meaning "bad")

The long-side of the aggregate of the largest polyaniline complex contained in the area of 2.0 mmx2.6 mm was 8 µm, and the solubility was O (meaning "good"). The results are shown in Table 1. In other words, in Example 1, a polyaniline solution (composition) was obtained. The polyaniline solution obtained here is referred to as a "polyaniline solution 1."

### (Toxicity evaluation of polyaniline solutions)

Based on the relationship between the solvent used (propylene glycol mono-n-butyl ether in Example 1) and the subject of control under the Poisonous and Deleterious Substances Control Act (Act No. 303 of December 28, 1950), the toxicity was evaluated as follows. The results are shown in Table 1.

Solvents are not subject to control: O (meaning "good")
Solvents are subject to control: X (meaning "bad")

### (Solubility test of polyaniline complex in wax)

10 g of a wax Daphne chain coat (manufactured by Idemitsu Kosan Co.,Ltd.) was mixed with 0.1 g of polyaniline solution 1, and the mixture was stirred at 2000 rpm for 5 minutes using a stirrer "ARE-250" (manufactured by THINKY CORPORATION). Thereafter, the mixture was defoamed using "ARE-250" at 2200 rpm for 3 minutes to obtain a composition further containing the wax.

The resulting composition was applied to a glass slide and the prepared slide was placed on an optical microscope and observed at 50x magnification. The solubility test of polyaniline complex in wax was carried out as follows.

The length of the long-side of the aggregate of the largest polyaniline complex (the distance connecting the farthest 2 points of the aggregate of one polyaniline complex) contained in the area of 2.0 mm×2.6 mm in the observed image of the optical microscope was measured and evaluated by the following criterion. The results are shown in Table 1.

The length of the long-side is less than 10 µm: O (meaning "good")
The length of the long side is 10 µm or more and less than 100 µm: Δ (meaning "poor")
The length of the long side is 100 µm or more: X (meaning "bad")

### (Solubility test of polyaniline complex in polyurethane)

10 g of polyurethane "ASPU-360" (manufactured by DIC Corporation) was mixed with 0.1 g of polyaniline solution 1, and the mixture was stirred at 2000 rpm (min⁻¹) for 5 minutes using ARE-250. Thereafter, the mixture was defoamed using "ARE-250" at 2200 rpm for 3 minutes to obtain a composition further containing polyurethane "ASPU-360."

The resulting composition was applied to a glass slide and the prepared slide was placed on an optical microscope and observed at 50x magnification. The solubility test of polyaniline complex in polyurethane was carried out as follows.

The length of the long-side of the aggregate of the largest polyaniline complex (the distance connecting the farthest 2 points of the aggregate of one polyaniline complex) contained in the area of 2.0 mm×2.6 mm in the observed image of the optical microscope was measured and evaluated by the following criterion. The results are shown in Table 1.

The length of the long-side is less than 10 µm: O (meaning "good")
The length of the long-side is 10 µm or more and less than 100 µm: Δ (meaning "poor")
The length of the long-side is 100 µm or more: X (meaning "bad")

### Example 2 to 4

Polyaniline solutions were produced and evaluated in the same manner as in Example 1, except that propylene glycol mono-n-butyl ether was changed to the solvents shown in Table 1. The results are shown in Table 1.

### Comparative Example 1

The same operations were performed as in Example 1, except that propylene glycol mono-n-butyl ether was changed to the solvents shown in Table 1.

The result of the solubility test of polyaniline complex in a solvent was "X" (meaning "bad"), and a good polyaniline solution could not be obtained. Therefore, evaluations after the toxicity evaluation was not performed.

### Comparative Example 2

The same operations were performed as in Example 1, except that the amount of polyaniline complex was changed to 1.6 g and 6 g of propylene glycol mono-n-butyl ether was changed to 6.4 g of toluene. The result of the solubility test of polyaniline complex in a solvent was "X" (meaning "bad"), and a good polyaniline solution could not be obtained. Therefore, evaluations after the toxicity evaluation was not performed.

### Comparative Example 3

Polyaniline solution was produced and evaluated in the same manner as in Example 1, except that the amount of the polyaniline complex was changed to 0.96 g and the 6 g of propylene glycol mono-n-butyl ether was changed to 7.04 g of toluene. The results are shown in Table 1.

### Comparative Example 4

The same operations were performed as in Example 1, except that propylene glycol mono-n-butyl ether was changed to the solvents shown in Table 1. The result of the solubility test of polyaniline complex in a solvent was "X" (meaning "bad"), and a good polyaniline solution could not be obtained. Therefore, evaluations after the toxicity evaluation was not performed.

### Comparative Example 5

The same operations were performed as in Example 1, except that the amount of polyaniline complex was changed to 1.6 g and 6 g of propylene glycol mono-n-butyl ether was changed to 6.4 g of propylene glycol monomethyl ether. The result of the solubility test of polyaniline complex in a solvent was "X" (meaning "bad"), and a good polyaniline solution could not be obtained. Therefore, evaluations after the toxicity evaluation was not performed.

### Comparative Example 6

The same procedure as in Example 1 was performed except that the amount of polyaniline complex was changed to 0.96 g and 6 g of propylene glycol mono-n-butyl ether was changed to 7.04 g of propylene glycol monomethyl ether. The result of the solubility test of polyaniline complex in a solvent was "X" (meaning "bad"), and a good polyaniline solution could not be obtained. Therefore, evaluations after the toxicity evaluation was not performed.

### Comparative Example 7

Polyaniline solutions were prepared and evaluated in the same manner as in Example 1 except that the amount of polyaniline complex was changed to 0.24 g and 6 g of propylene glycol mono-n-butyl ether was changed to 7.76 g of propylene glycol monomethyl ether. The results are shown in Table 1.

**Table 1**

| | Solvent | solid concentration (% by mass) | Solubility test in solvent | Toxicity evaluation | Solubility test in wax | Solubility test in polyurethane |
|---|---|---|---|---|---|---|
| Example 1 | Propylene glycol mono-n-butyl ether | 25 | ○ | ○ | ○ | ○ |
| Example 2 | Ethylene glycol mono-tert-butyl ether | 25 | ○ | ○ | ○ | ○ |
| Example 3 | Ethylene glycol monoisobutyl ether | 25 | ○ | ○ | ○ | ○ |
| Example 4 | Ethylene glycol mono-n-butyl ether | 25 | ○ | ○ | ○ | ○ |
| Comp. Ex. 1 | Toluene | 25 | × | - | - | - |
| Comp. Ex. 2 | Toluene | 20 | × | - | - | - |
| Comp. Ex. 3 | Toluene | 12 | ○ | × | ○ | ○ |
| Comp. Ex. 4 | Propylene glycol monomethyl ether | 25 | × | - | - | - |
| Comp. Ex. 5 | Propylene glycol monomethyl ether | 20 | × | | | |
| Comp. Ex. 6 | Propylene glycol monomethyl ether | 12 | × | - | - | - |
| Comp. Ex. 7 | Propylene glycol monomethyl ether | 3 | ○ | ○ | × | × |

In Table 1, "-" indicates that the test was not conducted.

### Example 5

Polyaniline solution having a solid concentration of 25% by mass was prepared and evaluated in the same manner as in Example 1, except that 6 g of propylene glycol mono-n-butyl ether was changed to a mixed solvent of 3 g of 2-phenoxyethanol and 3 g of propylene glycol mono-n-butyl ether. The results are shown in Table 2.

### Example 6

Polyaniline solution having a solid concentration of 25% by mass was prepared and evaluated in the same manner as in Example 1, except that 6 g of propylene glycol mono-n-butyl ether was changed to a mixed solvent of 3 g of 2-phenoxyethanol and 3 g of propylene glycol mono-tert-butyl ether. The results are shown in Table 2.

**Table 2**

| | Solvent | solid concentration (% by mass) | Solubility test in solvent | Toxicity evaluation | Solubility test in wax | Solubility test in polyurethane |
|---|---|---|---|---|---|---|
| Example 5 | 2-Phenoxyethanol + Propylene glycol mono-n-butyl ether | 25 | ○ | ○ | ○ | ○ |
| Example 6 | 2-Phenoxyethanol + Propylene glycol mono-tert-butyl ether | 25 | ○ | ○ | Δ | Δ |

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification are incorporated herein by reference in its entirety.

## Claims

1. A composition comprising
a conductive polymer, and
a compound having an OH group and further having a butoxy group.

2. The composition according to claim 1, wherein the compound having an OH group and further having a butoxy group further has an alkylene group including 1 to 6 carbon atoms.

3. The composition according to claim 1 or 2, wherein the compound having an OH group and further having a butoxy group is a compound represented by the following formula (11):
R¹-O-R²-OH (11)
wherein in the formula (11), R¹ is a butyl group; and R² is an alkylene group including 1 to 6 carbon atoms.

4. The composition according to claim 3, wherein R¹ is a n-butyl group, an isobutyl group, or a tert-butyl group.

5. The composition according to claim 3 or 4, wherein R² is a methylene group, an ethylene group, a propylene group, or a butylene group.

6. The composition according to any one of claims 1 to 5, wherein the compound having an OH group and further having a butoxy group is one or more selected from the group consisting of propylene glycol mono-n-butyl ether, propylene glycol mono-tert-butyl ether, propylene glycol monoisobutyl ether, ethylene glycol mono-n-butyl ether, ethylene glycol mono-tert-butyl ether, and ethylene glycol monoisobutyl ether.

7. The composition according to any one of claims 1 to 6, wherein the conductive polymer is a substituted or unsubstituted polyaniline doped with a dopant.

8. The composition according to claim 7, wherein the dopant is a sulfosuccinate derivative.

9. The composition according to any one of claims 1 to 8, further comprising a phenolic compound.

10. The composition according to claim 9, wherein the phenolic compound is cresol.

11. The composition according to any one of claims 1 to 10, wherein the content of the conductive polymer is 15 to 35% by mass, based on the total mass of the composition.

12. The composition according to any one of claims 1 to 11, further comprising a binder.

13. The composition according to claim 12, wherein the binder is a resin other than the conductive polymer.

14. The composition according to claim 12, wherein the binder is an oil.

15. The composition according to claim 14, wherein the oil is paraffin.

16. A redox material, comprising the composition according to any one of claims 1 to 15.

17. The redox material according to claim 16, having conductivity.
